# EUROPÄISCHE PATENTANMELDUNG

(11) **EP 2 832 993 A1**
(43) Veröffentlichungstag der Anmeldung: **04.02.2015**
(21) Anmeldenummer: 14003651.8
(22) Anmeldetag: 28.11.2012
(51) Int. Cl.: F03D 11/04, E02D 27/42

(54) **Fundament für einen Turm einer Windkraftanlage**

(30) Priorität: 06.03.2012 DE 102012004214
(62) Teilanmeldung aus: 12801453.7
(71) Anmelder: TimberTower GmbH, 30165 Hannover (DE)
(72) Erfinder: Prass, Gregor, 22455 Hamburg (DE)
(74) Vertreter: Wetzel, Philipp

(57) **Zusammenfassung**

Die Erfindung betrifft ein Fundament für einen Turm (100) einer Windkraftanlage mit einem Fundamentkörper, der eine kraftübertragende Verbindung mit dem Untergrund bereitstellt, auf dem der Turm (100) der Windkraftanlage errichtbar ist, wobei Bewehrungsstäbe (19) einseitig in den Fundamentkörper eingelassen sind, so dass sie im Bereich der zu gründenden Windkraftanlage aus dem Fundamentkörper heraustreten, und mit wenigstens einem Anschlusselement (20, 27), das zu den Bewehrungsstäben (19) korrespondierende Bohrungen (21) ausweist, so dass die Bewehrungsstäbe (19) in die Öffnungen (21, 28) einsetzbar sind, wobei über das Anschlusselement (20, 27) eine haltende Verbindung mit der Basis (110) des Turms (100) der Windkraftanlage herstellbar ist.

## Beschreibung

Die Erfindung betrifft ein Fundament für einen Turm einer Windkraftanlage mit einem Fundamentkörper, der eine kraftübertragende Verbindung mit dem Untergrund bereitstellt, auf dem der Turm der Windkraftanlage errichtbar ist.

Bei einer Windkraftanlage handelt es sich um eine Vorrichtung zur Erzeugung von elektrischer Energie. Die Windkraftanlage ist mit einem Fundament, einem Turm, der auf dem Fundament errichtet wird, und einer Gondel, die auf dem Turm angeordnet wird, versehen. An der Gondel befindet sich die mit Rotorblättern verbundene Antriebseinheit zur Energieerzeugung.

Die Konstruktion des Turms und des Fundaments ist ausgerichtet auf die durch die Gondel auf den Turm erzeugte statische Belastung und die durch die Rotation der Drehflügel das Rotors und der Bewegungsmöglichkeit der Gondel in Abhängigkeit der Windrichtung erzeugten dynamischen Belastungen. Diese Belastungen werden über den dafür ausgelegten Turm in das Fundament der Windkraftanlage abgeleitet. Fundamente werden beispielsweise als Flachgründungen in Form von Betonkörpern als Vollkörper hergestellt.

Bekannte Türme werden aus Stahlringan oder Betonelementen hergestellt. Die Grundflächen der bekannten Türme sind dabei entweder Polygone oder ringförmige Kreissegmente. Polygonale Türme, die aus einzelnen Segmenten aus Beton hergestellt sind, sind bekannt aus WO 2003/069089 A. Des Weiteren ist bekannt, solche polygonalen Türme aus Holz zu errichten (DE 10 2007 006 652 A1).

Unter wirtschaftlichen Gesichtspunkten ist es erwünscht, die Höhe der Türme wirtschaftlich maximiert zu errichten, da der Ertrag einer Windkraftanlage von der Nabenhöhe des Rotors abhängt und der Ertrag mit Zunahme der Höhe steigt. Gleichzeitig steigen die durch die größere Höhe des Turms entstehenden Anforderungen an die Statik und das Material bzw. den Materialaufwand des Turms. Die Wandstärken nehmen zu und dadurch steigt der Errichtungsaufwand des Turms. Dieses hat entsprechend auch Auswirkungen auf das Fundament der Windkraftanlage.

Ein entscheidender Aspekt bei der Errichtung eines Turms für eine Windkraftanlage ist die Herstellung der Verbindung zwischen Fundament und Turmkörper. Bei Stahltürmen, die auf einem Betonfundament errichtet werden, kann beispielsweise an untersten Stahlring ein entsprechender Flansch vorgesehen werden, über den dann entsprechend eine Verbindung mit dem Fundament beispielsweise über Gewindestangen, die in das Fundamt eingelassen sind, hergestellt wird. Bei Türmen aus Holz bzw. aus einem Holzwerkstoff hat sich gezeigt, dass die Herstellung der Verbindung zwischen Fundament und Turmkörper zeitaufwendig und kostenintensiv ist. Eine Möglichkeit der Herstellung der Verbindung war bisher, dass ein Adapterflansch aus Stahl hergestellt wurde, der auf der einen Seite eine Verbindungsmöglichkeit mit dem Betonfundamt aufwies und auf der anderen Seite mit Stahlblechen versehen wurde, die in Schlitze in den Wandabschnitten des Turms eingesetzt wurden. Anschließend wurde eine haltende Verbindung zwischen dem Wandabschnitt und den in den Wandabschnitt eingesetzten Blechen hergestellt. Dieser Anschluss hat sich als verbesserungswürdig herausgestellt, da eine sehr hohe Präzision bei der Ausrichtung des Adapters in Bezug auf das Fundament notwendig ist, und gleichzeitig ein nicht unerheblicher Kostenaufwand vorhanden ist, um den Anschluss zwischen Turm und Fundament bereit zu stellen.

Aufgabe der Erfindung ist daher, ein Fundament bereit zu stellen, mit dem ein hinreichend haltende Verbindung zwischen Fundament und Turm herstellbar Ist und gleichzeitig der Montageaufwand und die Kosten niedrig sind.

Erfindungsgemäß erfolgt die Lösung der Aufgabe dadurch, dass Bewehrungsstäbe einseitig in den Fundamentkörper eingelassen sind, so dass sie im Bereich der zu gründenden Windkraftanlage aus dem Fundamentkörper heraustreten, und dass wenigstens ein Anschlusselement, das zu den Bewehrungsstäben korrespondierende Bohrungen ausweist, vorgesehen ist, so dass die Bewehrungsstäbe in die Öffnungen einsetzbar sind, wobei über das Anschlusselement eine haltende Verbindung mit der Basis des Turms der Windkraftanlage herstellbar ist.

Bei den Bewehrungsstäben handelt es sich um kostengünstige Materialien, die einfach sowohl in das Fundament einbringbar sind als auch schnell mit einem entsprechenden Anschlusselement in Verbindung bringbar sind. Der Aufwand bei der Herstellung ist dabei gering.

Eine vorteilhafte Lehre der Erfindung sieht vor, dass der Fundamentkörper aus Holz, einem Holzwerkstoff und/oder Beton hergestellt ist. Hierbei handelt es sich um kostenkündige Materialen für die Herstellung des Fundamentkörpers.

Eine weitere Lehre der Erfindung sieht vor, dass die Bewehrungsstäbe vorspannungsfrei im Fundamentkörper angeordnet sind, wobei sie bevorzugt soweit aus dem Fundamentkörper heraustreten, dass sämtliche Lasten vom Turm in das Fundament abtragbar sind. Diese Anordnung der Bewehrungsstäbe stellt die einfachste Herstellungsart dar.

Eine weitere Lehre der Erfindung sieht vor, dass die Bewehrungsstäbe in das Anschlusselement nach deren Einbringen in die Bohrungen eingeklebbar sind, wobei bevorzugt das Anschlusselement eine Verbindungsbohrung zur Bohrung für den Bewehrungsstab zum Einpressen des Klebstoffs aufweist. Hierdurch wird es auf einfache Weise möglich, eine haltende Verbindung zwischen Bewehrungsstab und Anschlusselement bereit zu stellen. Durch die Verbindungsbohrung, über die der Klebstoff in die tatsächliche Bohrung einbringbar ist, wird die Herstellung zusätzlich noch vereinfacht.

Eine weitere Lehre der Erfindung sieht vor, dass das Anschlusselement aus Holz oder einem Holzwerkstoff, bevorzugt Brettschicht- oder Brettsperrholz, besteht, und/oder dass für einen Basisabschnitt des Turms der Windkraftanlage wenigstens zwei parallel auf den Längsseiten des Basisabschnitts angeordnete Anschlusselemente vorgesehen sind. Das Vorsehen des Anschlusselements aus Holz hat sich insbesondere bei der Herrichtung eines Turm für eine Windkraftanlage aus Holz oder einem Holzwerkstoff als vorteilhaft in Bezug auf das Materialverhalten herausgestellt. Das Vorsehen von wenigstens zwei parallel auf den Längsseiten des Basisabschnitts angeordneten Anschlusselementen hat sich als vorteilhaft In Bezug auf die Krafteinleitung und Kraftableitung herausgestellt. Weiterhin ist vorteilhaft, dass das Anschlusselement mit dem Basisabschnitt des Turms der Windkraftanlage verklebt ist. Das Verkleben erfolgt dabei vorteilhafterweise bereits bei der Herstellung des Basisabschnitts selber.

Eine weitere Lehre der Erfindung sieht vor, dass der Fundamentkörper wenigstens einen unterirdischen Abschnitt und/oder einen oberirdischen Abschnitt aufweist, wobei ein Teil des oberirdischen Abschnitts bevorzugt wandartig aufgebaut ist, und besonders bevorzugt mit einem deckenartigen Abschnitt geschlossen ist, so dass ein Raum entsteht. Das Bereitstellen des Raums hat sich als vorteilhaft erwiesen, da in diesem die für die Stromerzeugung notwendigen Wandlungs- und Steuerungskomponenten in diesem vorteilhafterweise angeordnet werden können.

Eine weitere Lehre der Erfindung sieht vor, dass der Turm der Windkraftanlage einen polygonalen Querschnitt aufweist, und/oder dass der Turm der Windkraftanlage aus einzelnen Wandelementen zusammengesetzt ist, wobei die Wandelemente bevorzugt aus Holz oder einem Holzwerkstoff bestehen.

Des Weiteren sieht die Erfindung eine Windkraftanlage mit einem zuvor beschriebenen Fundament vor.

Nachfolgend wird die Erfindung anhand eines bevorzugten Ausführungsbeispiels in Verbindung mit einer Zeichnung näher erläutert. Dabei zeigen:
- Fig. 1: eine Schnittansicht durch eine erste Ausführungsform des erfindungsgemäßen Fundaments,
- Fig. 2: eine alternative Ausführungsform zu Fig. 1,
- Fig. 3: eine zweite Ausführungsform eines erfindungsgemäßen Fundaments in Schnittansicht,
- Fig. 4: eine alternative Ausführungsform zu Fig. 3,
- Fig. 5: eine Draufsicht auf ein erfindungsgemäßes Fundament mit geschnitten dargestellter erster Ebene eines polygonalen Turms,
- Fig. 6: eine räumliche Darstellung eines erfindungsgemäßen Anschlusselements,
- Fig. 7: eine erfindungsgemäße Ausführung einer ersten Lehre, und
- Fig. 8: eine zweite Ausführungsform einer erfindungsgemäßen Lehre in Verbdingung mit dem Fundament.

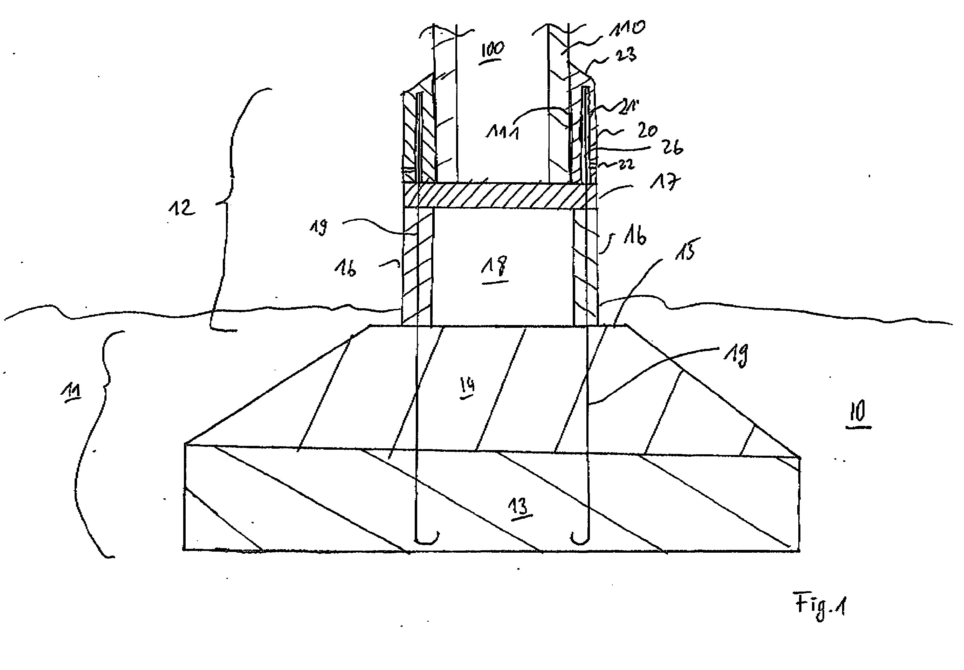

Fig. 1 zeigt in Schnittansicht ein erfindungsgemäßes Fundament 10 mit einem unterirdischen Fundamentabschnitt 11 und einem überirdischen Fundamentabschnitt 12. Der unterirdische Fundamentabschnitt 11 weist einen plattenartigen Abschnitt 13 und einen konischen Abschnitt 14 auf. Der plattenartige Abschnitt 13 ist dabei in einem ersten Herstellungsschritt hergestellt und auf dem plattenartigen Abschnitt 13 wird dann der konische Abschnitt 14 in einem zweiten Herstellungsschritt hergestellt. Alternativ können diese beiden Abschnitte auch in einem Herstellungsschritt als ein Körper hergestellt werden. Zwischen dem plattenartigen Abschnitten 13 und dem konischen Abschnitt 14 können Bewehrungselemente (nicht dargestellt) vorgesehen sein.

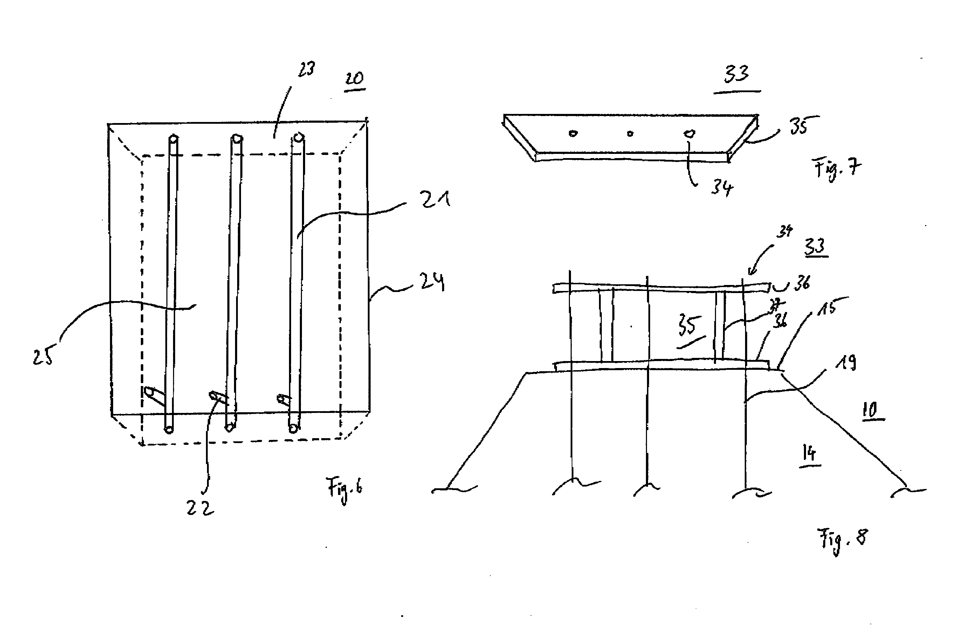

Auf der Oberfläche 15 des konischen Abschnitts 14 sind Wandelemente 16 angeordnet. Diese Wandelemente 16 sind mit einer Decke 17 verschlossen, so dass sich im Inneren zwischen der Wandelemente 16 und der Decke 17 ein Raum 18 bildet. Ausgehend vom unteren plattenartigen Abschnitt 13 über den konischen Abschnitt 14 und die Wandelement 16 sind Bewehrungsstäbe 19 vorgesehen, die aus der Decke 17 heraustreten. Auf der Decke 17 sind Anschlusselemente 20 (siehe Fig. 6) angeordnet. Im Anschlusselement 20 sind Bohrungen 21 vorgesehen, in die die Bewehrungsstäbe 19 einsetzbar sind. Die Bohrungen 21 sind mit der Außenseite 24 über Verbindungsbohrungen 22 verbunden. Ober die Verbindungsbohrung wird Klebstoff (nicht dargestellt) In die Bohrung 21 eingebracht, wodurch eine haltende Verbindung zwischen Bewehrungsstab 19 und Anschlusselement 20 herstellbar ist. Das Anschlusselement 20 weist eine Oberseite 23 auf. Die Oberseite kann entweder, wie in Fig. 1 dargestellt, einfallend ausgeführt sein, oder gerade, wie dieses in Fig. 6 gezeigt ist. Die Bohrung 21 kann als Sacklochbohrung ausgeführt sein, wie dieses in Fig. 1 gezeigt ist oder als durchgehende Bohrung, wie dieses in Fig. 6 gezeigt ist. Die Innenseite 25 dient als Verbindungsfläche mit einem Wandabschnitt 110 eines Turms 100 für eine Windkraftanlage. Zwischen der Innenseite 25 des Anschlusselements 20 und einer Seitenwand 111 des Wandabschnitts 110 wird ein Klebstoff (nicht dargestellt) eingebracht, um eine haltende Verbindung zwischen Anschlusselement 20 und Wandabschnitt 110 zu erzeugen. Sowohl das Anschlusselement 20 als auch der Wandabschnitt 110 stehen dabei auf der Decke 17 oder auf der Oberfläche 15 des Fundaments 10 auf.

Die Bewehrungsstäbe 19 gehen bevorzugterweise, wie dieses in Fig. 1 dargestellt ist, durch sämtliche Abschnitte des Fundaments 10 hindurch. Der Bewehrungsstab 19 weist einen außenstehenden Abschnitt 26 auf, der als Verbindungsabschnitt mit dem Anschlusselement 20 fungiert. Die Länge des Außenabschnitts 26 wird dabei so bemessen, dass sämtliche im Turm 100 auftretende Lasten durch den Außenabschnitt 26 aufgenommen werden.

Der überirdische Fundamentabschnitt 12 umfasst auch das Anschlusselement 20.

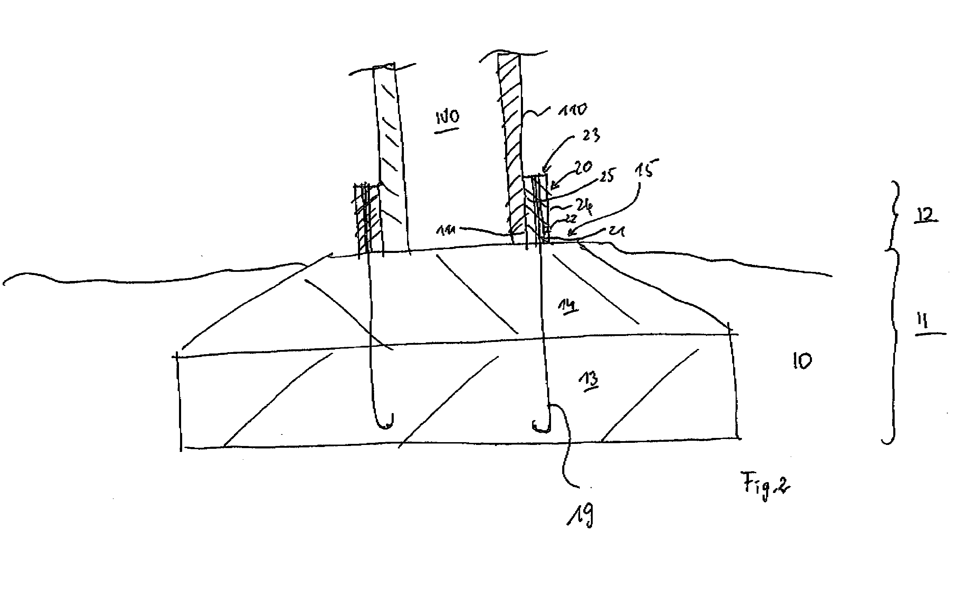

Eine alternative Ausführungsform des Fundaments 10 ist in Fig. 2 dargestellt. Dabei weißt der überirdische Fundamentabschnitt 12 lediglich die Anschlusselemente 20 auf. Die Wandelemente 16 und die Decke 17 sind weggelassen. Das Anschlusselement 20 und die Wandabschnitte 110 stehen dabei direkt auf der Oberfläche 15 auf und bilden den überirdischen Fundamentabschnitt 12.

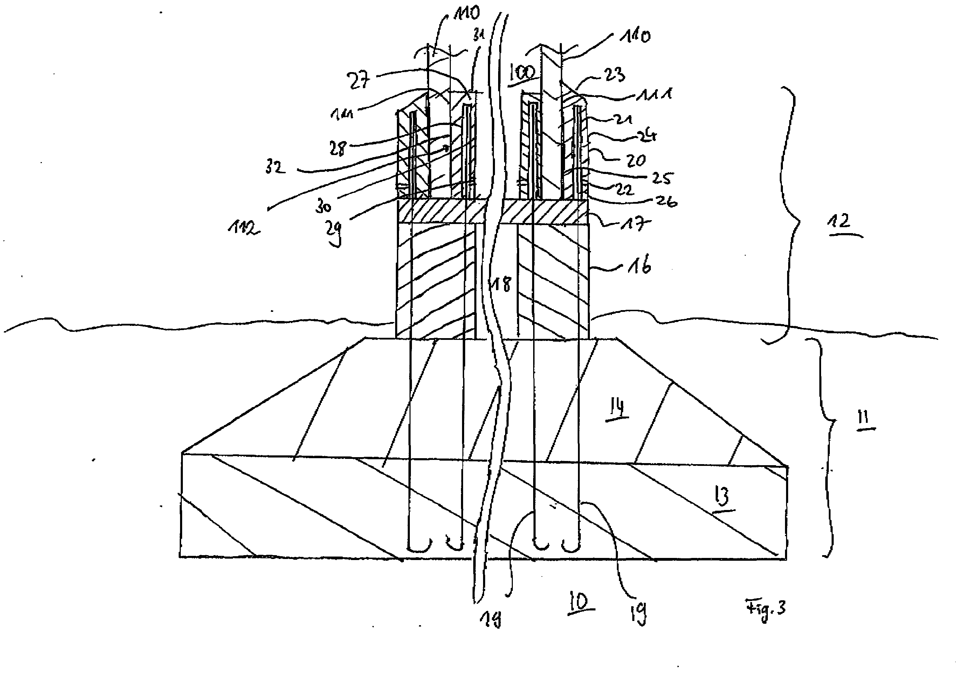

In Fig. 3 ist eine weitere Ausführungsform des erfindungsgemäßen Fundaments 10 dargestellt. Dieses unterscheidet sich von dem zuvor Beschriebenen dahingehend, dass pro Wandabschnitt 110 ein außen angeordnetes Anschlusselement 20 und ein innen angeordnetes Anschlusselement 27 vorgesehen sind. Dementsprechend sind die Bewehrungsstäbe 19 pro Wandabschnitt 110 doppel ausgeführt. Dieses weist ebenfalls eine Bohrung 28 und eine Verbindungsborhung 29 an der Außenseite 30 zum Einbringen des Klebstoffs auf. In Fig. 3 ist die Oberseite 31 plan ausgeführt. Die Bohrung 28 ist ebenfalls als Sacklochbohrung ausgeführt. In Seite 32 des Anschlusselements 27 dient als Verbindungsfläche mit einer Seitenwand 112 des Wandabschnitts 110.

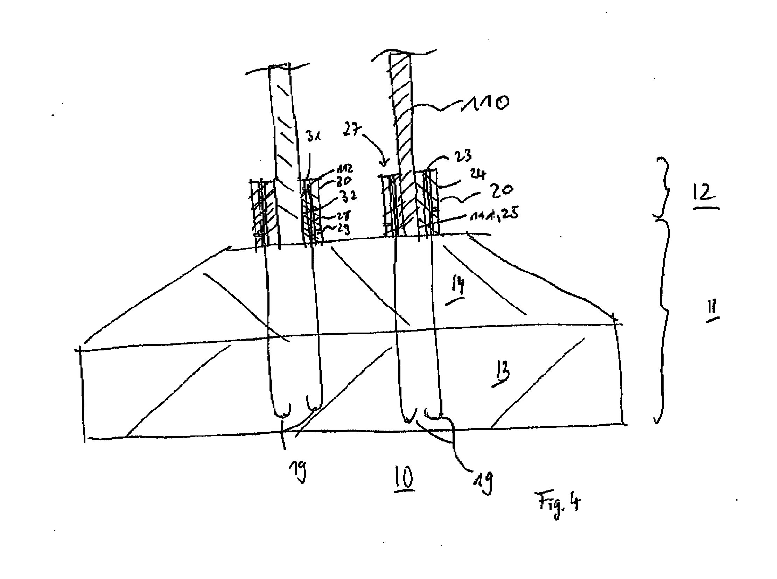

Fig. 4 zeigt eine alternative Ausführungsform zu Fig. 3, bei dem wiederum die Wandelemente 16, die Decke 17 und der Raum 18 weggelassen wurden, so dass die Anschlusselemente 20, 26 und der Wandabschnitt 110 direkt auf der Oberfläche 15 auch stehen. Ansonsten ist diese Ausführungsform wie die in Fig. 2 beschriebene Ausführungsform ausgeführt.

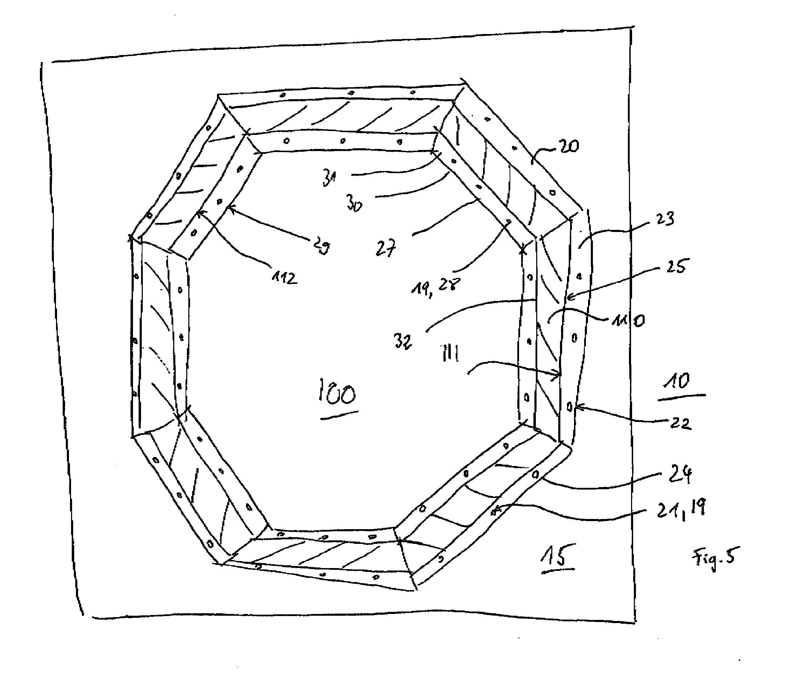

Fig. 5 zeigt eine Draufsicht auf einen polygonalen Turm 100 auf der Oberfläche 15 des Fundaments 10 mit vorgesehenen Anschlusselementen 20, 27.

Zum Errichten des Fundaments 10 bzw. bei der Anordnung der Bewehrungsstäbe 19 ist es notwendig, dass die Positionen der Außenabschnitte 26 der Bewehrungsstäbe 19 mit den Bohrungen 21, 28 in den Anschlusselementen 20, 27 korrespondieren. Hierfür wird vorteilhafterweise eine Lehre 33 vorgesehen, die ebenfalls Bohrungen 34 aufweisen, die mit den Bohrungen 21, 28 der Anschlusselemente 20, 27 übereinstimmen. Die Lehre 33 wird jeweils auf den noch nicht im Fundament befindlichen Teil (beispielsweise Außenabschnitt 26) der Bewehrungsstäbe 19 aufgesetzt, um die jeweilige Position der Bewehrungsstäbe 19 zu halten. Die Lehre 33 kann dabei einen Grundkörper 35 aufweisen, in dem die Bohrungen 34 vorgesehen sind. Eine alternative Ausführungsform der Lehre 33 ist in Fig. 8 dargestellt. Dabei umfasst Grundkörper 35 mehrere horizontale Abschnitte 36, die über vertikale Verbindungselemente miteinander verbunden sind.

Nachdem der unterirdische Abschnitt 11 und der oberirdische Abschnitt 12, beispielsweise bestehend aus den Wandabschnitten 16 und der Decke 17 sowie den darin angeordneten Bewehrungsstäben 19 hergestellt sind, ist es möglich, die Anschlusselemente 20, 27 auf die Außenabschnitte 26 der Bewehrungsstäbe 19 auszusetzen. Über die Verbindungsbohrungen 22 wird dann der Klebstoff in die Bohrungen 21 eingebracht, so dass eine hinreichende haltende Verbindung des Außenabschnitts 26 der Bewehrungsstäbe mit den Anschlusselementen 20, 27 hergestellt wird. Dabei ist es möglich, entweder zuerst die Anschlusselemente 20, 27 anzubringen und anschließend die Wandabschnitte 110 in Bezug auf die Anschlusselemente 20, 27 anzuordnen und mit diesen zu verbinden. Alternativ (und vorteilhaft) ist es, wenn die Anschlusselemente vor dem Anbringen an den Außenabschnitten 26 der Bewehrungsstäbe 19 bereits den Wandabschnitten 110 verbunden sind, da hierdurch eine besonders gut Verbindung zwischen den Wandabschnitten 110 und den Anschlusselemente 20, 27 durch Vormontage bereit gestellt werden kann. Des Weiteren erfolgt die Errichtung des ersten Turmabschnitts bestehend aus den unteren Wandabschnitts 110 schneller, als wenn erst noch eine haltende Verbindung zwischen den Anschlusselementen 20, 27 und den Wandabschnitten 110 bereit gestellt werden muss.

**Bezugszeichenliste:**

| | | | |
|---|---|---|---|
| 10 | Fundament | 100 | Turm |
| 11 | unterirdischer Fundamentabschnitt | 110 | Wandabschnitt |
| 12 | überirdischer Fundamentabschnitt | 111 | Seitenwand |
| 13 | plattenartiger Abschnitt | 112 | Seitenwand |
| 14 | konischer Abschnitt | | |
| 15 | Oberfläche | | |
| 16 | Wandelement | | |
| 17 | Decke | | |
| 18 | Raum | | |
| 19 | Bewehrungsstab | | |
| 20 | Anschlusselement | | |
| 21 | Bohrung | | |
| 22 | Verbindungsbohrung | | |
| 23 | Oberseite | | |
| 24 | Außenseite | | |
| 25 | Innenseite | | |
| 26 | Außenabschnitt | | |
| 27 | Anschlusselement | | |
| 28 | Bohrung | | |
| 29 | Verbindungsbohrung | | |
| 30 | Außenseite | | |
| 31 | Oberseite | | |
| 32 | Innenseite | | |
| 33 | Lehre | | |
| 34 | Bohrung | | |
| 35 | Grundkörper | | |
| 36 | horizontaler Abschnitt | | |
| 37 | vertikales Verbindungselement | | |

## Patentansprüche

1. Fundament für einen Turm (100) einer Windkraftanlage mit einem Fundamentkörper, der eine kraftübertragende Verbindung mit dem Untergrund bereitstellt, auf dem der Turm (100) der Windkraftanlage errichtbar ist, wobei Bewehrungsstäbe (19) einseitig in den Fundamentkörper eingelassen sind, so dass sie im Bereich der zu gründenden Windkraftanlage aus dem Fundamentkörper heraustreten, und mit wenigstens einem Anschlusselement (20, 27), das zu den Bewehrungsstäben (19) korrespondierende Bohrungen (21) ausweist, so dass die Bewehrungsstäbe (19) In die Öffnungen (21, 28) einsetzbar sind, wobei über das Anschlusselement (20, 27) eine haltende Verbindung mit der Basis (110) des Turms (100) der Windkraftanlage herstellbar ist.

2. Fundament nach Anspruch 1, **dadurch gekennzeichnet, dass** der Fundamentkörper aus Beton, aus Holz und/oder einem Holzwerkstoff hergestellt ist.

3. Fundament nach Anspruch 1 oder 2, **dadurch gekennzeichnet, dass** die Bewehrungsstäbe (19) vorspannungsfrei im Fundamentkörper angeordnet sind, wobei sie bevorzugt soweit aus dem Fundamentkörper heraustreten, dass sämtliche Lasten abtragbar sind.

4. Fundament nach einem der Ansprüche 1 bis 3, **dadurch gekennzeichnet, dass** die Bewehrungsstäbe (19) in das Anschlusselement (20, 27) nach deren Einbringen in die Bohrungen (21, 28) eingeklebbar sind, wobei bevorzugt das Anschlusselement (20, 27) eine Verbindungsbohrung (22, 29) zur Bohrung (21, 28) für den Bewehrungsstab (19) zum Einpressen des Klebstoffs aufweist.

5. Fundament nach einem der Ansprüche 1 bis 4, **dadurch gekennzeichnet, dass** das Anschlusselement (20, 27) aus Holz oder einem Holzwerkstoff, bevorzugt Brettschicht- oder Brettsperrholz, besteht, und/oder dass für einen Basisabschnitt das Turms (100) der Windkraftanlage wenigstens zwei parallel auf den Längsseiten (111, 112) des Basisabschnitts (110) angeordnete Anschlusselemente (20, 27) vorgesehen sind.

6. Fundament nach einem der Ansprüche 1 bis 5, **dadurch gekennzeichnet, dass** das Anschlusselement (20, 27) mit dem Basisabschnitt (110) des Turms (100) der Windkraftanlage verklebt ist.

7. Fundament nach einem der Ansprüche 1 bis 6, **dadurch gekennzeichnet, dass** der Fundamentkörper wenigstens einen unterirdischen Abschnitt (11) und/oder einen oberirdischen Abschnitt (12) aufweist, wobei ein Teil (16) des oberirdischen Abschnitts (12) bevorzugt wandartig aufgebaut Ist, und besonders bevorzugt mit einem deckenartigen Abschnitt (17) geschlossen ist, so dass ein Raum (18) entsteht.

8. Fundament nach einem der Ansprüche 1 bis 7, **dadurch gekennzeichnet, dass** der Turm (100) der Windkraftanlage einen polygonalen Querschnitt aufweist, und/oder dass der Turm (100) der Windkraftanlage aus einzelnen Wandelementen (110) zusammengesetzt ist, wobei die Wandelemente (110) bevorzugt aus Holz oder einem Holzwerkstoff bestehen.

9. Windkraftanlage mit einem Fundament (10) nach einem der Ansprüche 1 bis 8.
